(19)

Europäisches
Patentamt
European
Patent Office
Office européen
des brevets

(11)     **EP 3 470 666 B1**

(12)                              **EUROPEAN PATENT SPECIFICATION**

(45) Date of publication and mention
of the grant of the patent:
**20.04.2022   Bulletin 2022/16**

(21) Application number: **18200382.2**

(22) Date of filing: **15.10.2018**

(51) International Patent Classification (IPC):
**F03D 1/02** *(2006.01)*      **F03D 7/04** *(2006.01)*

(52) Cooperative Patent Classification (CPC):
**F03D 1/02; F03D 7/046;** F05B 2270/20;
F05B 2270/309; F05B 2270/335; Y02E 10/72

(54) **CONTROL SYSTEM FOR WIND POWER GENERATION APPARATUS, WIND POWER GENERATION  APPARATUS, AND CONTROL METHOD**

STEUERUNGSSYSTEM FÜR WINDENERGIEERZEUGUNGSVORRICHTUNG,
WINDENERGIEERZEUGUNGSVORRICHTUNG UND STEUERUNGSVERFAHREN

SYSTÈME DE COMMANDE POUR APPAREIL DE PRODUCTION D'ÉNERGIE ÉOLIENNE,
APPAREIL DE PRODUCTION D'ÉNERGIE ÉOLIENNE ET PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.10.2017   JP 2017200651**

(43) Date of publication of application:
**17.04.2019   Bulletin 2019/16**

(73) Proprietor: **MITSUBISHI HEAVY INDUSTRIES,
LTD.
Tokyo 108-8215 (JP)**

(72) Inventor: **IDE, Kazunari
TOKYO, 108-8215 (JP)**

(74) Representative: **Cabinet Beau de Loménie
158, rue de l'Université
75340 Paris Cedex 07 (FR)**

(56) References cited:
**WO-A1-2016/150447**

- **MOHD AHMAD ET AL: "A Model-Free Approach
for Maximizing Power Production of Wind Farm
Using Multi-Resolution Simultaneous
Perturbation Stochastic Approximation",
ENERGIES, vol. 7, no. 9, 1 January 2014
(2014-01-01) , pages 5624-5646, XP055563636,
DOI: 10.3390/en7095624**
- **FARRET F A ET AL: "Sensorless active yaw
control for wind turbines", IECON'01.
PROCEEDINGS OF THE 27TH. ANNUAL
CONFERENCE OF THE IEEE INDUSTRIAL
ELECTRONICS SOCIETY. DENVER, CO, NOV. 29
- DEC. 2, 2001; [ANNUAL CONFERENCE OF THE
IEEE INDUSTRIAL ELECTRONICS SOCIETY],
NEW YORK, NY : IEEE, US, vol. 2, 29 November
2001 (2001-11-29), pages 1370-1375,
XP010572977, DOI: 10.1109/IECON.2001.975981
ISBN: 978-0-7803-7108-8**

EP 3 470 666 B1

**Description**

[Technical Field]

The present invention relates to a control system for a wind power generation apparatus, a wind power generation apparatus, and a control method.

[Background Art]

A wind power generation apparatus generally has a configuration where only one wind turbine unit is installed on one tower portion (single rotor wind power generation apparatus). A so-called multi-rotor wind power generation apparatus is also known where a plurality of wind turbine units are installed on one tower portion. In the multi-rotor wind power generation apparatus, the wind turbine units have a large total swept area, thus increasing the amount of power generation (output power) acquired from one tower portion.

PTL 1 and PTL 2 and PTL 3 disclose techniques relating to the multi-rotor wind power generation apparatus.

[Citation List]

[Patent Literature]

[PTL 1]PCT International Publication No. WO 2017/108057
:PTL 2]German Patent No. 102012020052
[PTL 3] PCT International Publication No. WO 2016/150447

[Summary of Invention]

[Technical Problem]

In a conventional single rotor wind power generation apparatus, the simultaneous perturbation stochastic approximation (hereinafter referred to as "SPSA") is adopted as a method for searching for an optimum point (a value of a parameter by which a power generation output reaches the maximum) of each parameter (the pitch angle of a blade, for example) of the wind power generation apparatus according to variations in wind conditions in the surroundings (wind conditions). However, in the method for searching for the optimum point by applying the SPSA to a single rotor wind power generation apparatus, it is necessary to acquire data by spending an amount of time corresponding to two predetermined control cycles so as to add perturbations having different polarities. The optimum point is searched for based on the acquired data and hence, promptly searching for an optimum point is difficult.

Further, wind conditions vary from moment to moment. Accordingly, when searching for an optimum point requires time, followability with respect to variations in wind conditions cannot be improved.

In a multi-rotor wind power generation apparatus, a plurality of wind turbine units are provided to one tower portion and hence, one wind power generation apparatus has high power generation capacity. Accordingly, there has been a demand for a multi-rotor wind power generation apparatus to improve followability with respect to variations in wind conditions, and to be efficiently operated at an optimum point.

The present invention has been made under such circumstance, and it is an object of the present invention to provide a control system for a wind power generation apparatus, a wind power generation apparatus, and a control method which have high followability with respect to variations in wind condition, can be efficiently operated at an optimum point, and can increase the amount of power generation.

[Solution to Problem]

According to a first aspect of the present invention, there is provided a control system for a wind power generation apparatus including: a tower portion; a plurality of wind turbine units each including a rotor, a blade which is provided to the rotor, and a generator which generates power using a rotational force of the rotor; and a support member coupled to the tower portion, and configured to support the plurality of wind turbine units, the plurality of wind turbine units including a first wind turbine unit and a second wind turbine unit, the control system including: a perturbation addition unit configured to substantially simultaneously add perturbations respectively having different polarities to current set values of predetermined parameters for the first wind turbine unit and the second wind turbine unit; a measuring unit configured to measure respective power generation outputs of the first wind turbine unit and the second wind turbine unit after the perturbations are added; a gradient calculation unit configured to calculate a gradient of the power generation outputs at the current set values; and a correction unit configured to correct the current set values of the predetermined parameters for the first wind turbine unit and the second wind turbine unit such that the gradient increases.

According to the above-mentioned configuration, each of the plurality of wind turbine units includes the rotor, the blade which is provided to the rotor, and the generator which generates power using a rotational force of the rotor, and each of the wind turbine units is supported by the support member coupled to the tower portion. With such a configuration, the plurality of wind turbine units are installed on the tower portion by way of the support members. Accordingly, the respective wind turbine units are disposed in environments (wind conditions) having a relatively similar wind condition, thus rotating and generating power by catching wind in the same direction. Further, perturbations respectively having different polarities are added to predetermined parameters for the first wind turbine unit and the second wind turbine unit. Power generation outputs of the first wind turbine unit and the second wind turbine unit which are varied due to the addition of the perturbations are measured. A gradient of the generated powers at the current set values is approximately calculated based on the measured power generation outputs. Then, the current set values are corrected such that the calculated gradient increases. Accordingly, in both the first wind turbine unit and the second wind turbine unit, the predetermined parameters can be set at points closer to the optimum points and hence, the entire amount of power generation can be increased. Further, perturbations respectively having different polarities are substantially simultaneously added to the first wind turbine unit and the second wind turbine unit and hence, a gradient for correcting the current set values can be rapidly and efficiently acquired whereby the current set values of the predetermined parameters can be promptly corrected. Therefore, followability with respect to wind fluctuations is improved and hence, wind power generation apparatus can generate power more optimally.

In the above-mentioned control system, the measuring unit may calculate, for each of the first wind turbine unit and the second wind turbine unit, an average value of the power generation outputs measured after the perturbations are added.

According to the above-mentioned configuration, for each of the first wind turbine unit and the second wind turbine unit, an average value of the measured power generation outputs is calculated after the perturbations are added. Accordingly, even when each of the first wind turbine unit and the second wind turbine unit includes a plurality of wind turbine units, current set values of the predetermined parameters can be efficiently corrected.

In the above-mentioned control system, the perturbation addition unit may be configured to set the polarities of the perturbations to be added to the predetermined parameters for the first wind turbine unit and the second wind turbine unit at random for at least one of each predetermined control cycle and each predetermined parameter.

According to the above-mentioned configuration, the polarities of the perturbations to be added to the first wind turbine unit and the second wind turbine unit are set at random for at least one of each predetermined control cycle and each predetermined parameter. With such a configuration, compared to the case where the polarities of perturbations are not set at random, an optimum solution can be efficiently searched for without easily falling into a local solution. That is, both calculation efficiency and search ability can be improved.

In the above-mentioned control system, the predetermined parameter may be at least one of a pitch angle of the blade, a yaw angle of the wind turbine unit, or a rotor-rotational-speed-control optimizing coefficient.

According to the above-mentioned configuration, at least any one of the pitch angle of the blade, the yaw angle of the wind turbine unit, or a rotor-rotational-speed-control optimizing coefficient is used as a parameter. The pitch angle of the blade, the yaw angle of the wind turbine unit, and the rotor-rotational-speed-control optimizing coefficient are parameters which can control power generation output. Accordingly, correction can be efficiently performed and hence, the wind power generation apparatus can generate power more optimally.

According to a second aspect of the present invention, there is provided a wind power generation apparatus which includes: a tower portion; a plurality of wind turbine units each including a rotor, a blade which is provided to the rotor, and a generator which generates power using a rotational force of the rotor; a support member coupled to the tower portion, and configured to support the plurality of wind turbine units; and the above-mentioned control system.

According to a third aspect of the present invention, there is provided a method for controlling a wind power generation apparatus including: a tower portion; a plurality of wind turbine units each including a rotor, a blade which is provided to the rotor, and a generator which generates power using a rotational force of the rotor; and a support member coupled to the tower portion, and configured to support the plurality of wind turbine units, the plurality of wind turbine units including a first wind turbine unit and a second wind turbine unit, the method including: a perturbation adding step of substantially simultaneously adding perturbations respectively having different polarities to current set values of predetermined parameters for the first wind turbine unit and the second wind turbine unit; a measuring step of measuring respective power generation outputs of the first wind turbine unit and the second wind turbine unit after the perturbations are added; a gradient calculating step of calculating a gradient of the power generation outputs at the current set values; and a correcting step of correcting the current set values of the predetermined parameters for the first wind turbine unit and the second wind turbine unit such that the gradient increases.

[Advantageous Effects of Invention]

According to the present invention, it is possible to acquire advantageous effects that followability with respect to variations in wind conditions is high, an operation can be efficiently performed at an optimum point, and the amount of power generation can be increased.

[Brief Description of Drawings]

Fig. 1 is a view showing a schematic configuration of a wind power generation apparatus according to one embodiment of the present invention;
Fig. 2 is a function block diagram showing functions which a control unit of the wind power generation apparatus according to one embodiment of the present invention;
Fig. 3 is a view showing a flowchart of an optimization processing performed by the control unit of the wind power generation apparatus according to one embodiment of the present invention;
Fig. 4 is a view showing a flowchart of an optimization processing performed by a control unit of a wind power generation apparatus according to a modification of one embodiment of the present invention; and
Fig. 5 is a view showing a schematic configuration of the wind power generation apparatus according to one embodiment of the present invention.

[Description of Embodiments]

Hereinafter, one embodiment of a control system for a wind power generation apparatus, a wind power generation apparatus, and a control method according to the present invention is described with reference to drawings.

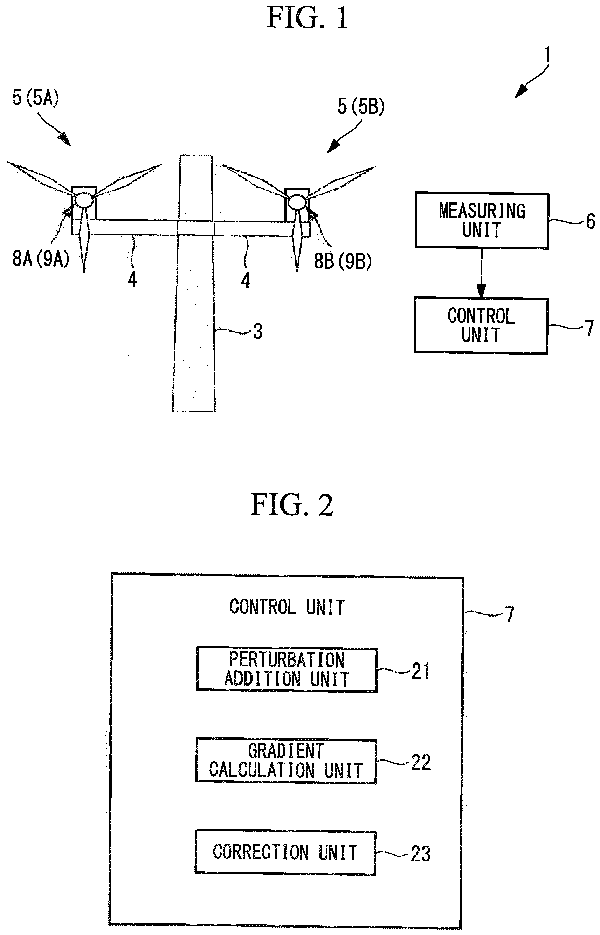

Fig. 1 is a view showing a schematic configuration of a wind power generation apparatus 1 having a control system according to one embodiment of the present invention. As shown in Fig. 1, the wind power generation apparatus 1 according to this embodiment includes, as main constitutional elements: a tower portion 3; support members 4; wind turbine units 5; a measuring unit 6; and a control unit 7. The wind power generation apparatus 1 is interconnected to a utility grid so as to transmit generated power to the utility grid, and is installed on land or at sea. The wind power generation apparatus 1 may be configured to supply power directly to factories or other facilities, or to power storage facilities besides the utility grid. The wind power generation apparatus 1 according to this embodiment is described assuming a multi-rotor wind power generation apparatus 1 which includes two wind turbine units 5. However, the number of wind turbine units 5 is not limited to two, and may be suitably changed. In the description made hereinafter, the respective wind turbine units 5 are described as wind turbine units 5A, 5B in describing the respective wind turbine units 5 in an individual manner, while the respective wind turbine units are simply given character 5 when the respective wind turbine units 5 are not distinguished from each other. Further, in the case where two or more wind turbine units 5 are provided, by dividing the wind turbine units 5 into groups consisting of a first wind turbine unit and a second wind turbine unit, it is possible to apply substantially the same processing as the case described below where two wind turbine units 5 (5A, 5B) are provided. The case where two or more wind turbine units 5 are provided is described in a modification described later. When the two wind turbine units 5 (5A, 5B) are provided, the wind turbine unit 5A may be construed as the first wind turbine unit, the wind turbine unit 5B may be construed as the second wind turbine unit.
The tower portion 3 has a structure extending in one direction, and a foundation portion of the tower portion 3 is mounted on an installation surface with an axial direction of the tower portion 3 extending in the direction perpendicular to the installation surface. The tower portion 3 may be formed of one columnar member, or may be formed by combining a plurality of elongated members, for example.
Each support member 4 is a member extending in one direction, for example. A proximal portion of the support member 4 on one end side is coupled to the tower portion 3, and the support member 4 supports the wind turbine unit 5 on the distal end side forming the other side. In the case where one wind turbine unit 5 is installed on one support member 4, the support members 4 whose number is equal to the number of wind turbine units 5 are coupled to the tower portion 3. The support member 4 may be formed of an elongated member having a columnar shape or the like, or may be formed of a member having a truss structure where a plurality of members are combined with each other. Further, the support member 4 may be formed of members including an elongated member which is mainly subject to a compressive force, and a wire member which is subject to a tensile force.
Each wind turbine unit 5 includes: a nacelle; a rotor and a generator housed in the nacelle; a rotor head installed at a distal end of the rotor; a plurality of (three, for example) blades provided to the rotor head and the like.
The nacelle is installed at an upper portion or a lower portion of the support member 4. The nacelle includes the rotor, a gear box, a generator and the like therein. The rotor head is provided on one end side of the nacelle. The rotor is rotatable about an axis which is substantially horizontal. One end side of the rotor is coupled to the rotor head, and the other side of the rotor is directly coupled to the generator, or is coupled to the generator through the gear box or a hydraulic pump and hydraulic motor, for example. A rotational force generated with the rotation of the rotor about an axis drives the generator so that the generator generates power.

The plurality of blades are radially mounted on the rotor head. The plurality of blades rotate about the rotor by catching wind. The blades are coupled to the rotor head by way of a pitch-controlling slewing ring bearing, and each blade is rotatable about an axis of the blade extending in the longitudinal direction of the blade. With such a configuration, the pitch angle of each blade is adjusted.

The nacelle turns on a substantially horizontal plane with respect to the support member 4 so as to align the direction of the rotor head with a wind direction, thus causing rotary surfaces of the blades to opposedly face the wind direction. Turning of the nacelle on a substantially horizontal plane is referred to as yaw turn (yawing). The nacelle turns by way of a yaw slewing ring bearing coupled to the nacelle and the support member 4.

The measuring unit 6 measures power generation outputs of respective wind turbine units 5. To be more specific, the measuring unit 6 measures power generation outputs of respective wind turbine units 5 after perturbations are added by the control unit 7 (after power generation outputs of the respective wind turbine units 5 are varied). The measuring unit 6 outputs measurement results of the power generation outputs of the respective wind turbine units 5 to a gradient calculation unit 22 of the control unit 7. In this embodiment, the case where the measuring unit 6 measures a power generation output is described. However, the measuring unit 6 may measure another physical quantity (a rotational speed of the generator, for example) having the correlation with power generation output.

The control unit 7 adds perturbations respectively having different polarities to current set values of predetermined parameters for the respective wind turbine units 5, thus causing power generation outputs of the respective wind turbine units 5 to vary. Then, a gradient of the power generation outputs is calculated from the varied power generation outputs of the respective wind turbine units 5, and the current set values are corrected such that the gradient increases (the power generation outputs increase). The predetermined parameter is at least any one of the pitch angle of the blade, the yaw angle of the wind turbine unit 5, or a rotor-rotational-speed-control optimizing coefficient. In this embodiment, only the case where a pitch angle is used as a predetermined parameter is described. However, substantially the same processing can be performed also in the case where another parameter is used.

In this embodiment, only the case is described where a pitch angle is used as a predetermined parameter. Accordingly, a gradient of power generation output is a gradient in a two-dimensional space. However, in the case where two or more of the above-mentioned parameters are simultaneously used, expanding a gradient of power generation output into a three-dimensional space or a four-dimensional space allows substantially the same processing to be performed. Simultaneously using the plurality of parameters allows an optimum point for operating the wind power generation apparatus 1 to be searched for more effectively. Further, a current set value of a predetermined parameter is a set value of the predetermined parameter immediately before control is started or at the time of starting control in a predetermined control cycle. For example, the current set value is a value such as a value set by a high-order control device of the wind power generation apparatus 1. To be more specific, as described later, the operation of the control unit 7 is started at timing where control is started in the predetermined control cycle. In the case where a pitch angle, which is the predetermined parameter, assumes $\theta k$ degrees at the timing where control is started, for example, a current set value is $\theta k$ degrees. The predetermined control cycle may be approximately 10 minutes, for example. However, in the case where the wind power generation apparatus 1 is installed in an area where a wind condition easily varies within a short period of time, particularly, in the case where improving followability with respect to the variations in a wind condition is expected, the predetermined control cycle may be desirably shortened. Further, in the case where saving consumption power required for control is expected, the predetermined control cycle may be increased.

The control unit 7 includes a CPU (Central Processing Unit) not shown in the drawing, a memory, such as a RAM (Random Access Memory), a computer readable recording medium and the like, for example. A process consisting of a series of processing steps to realize various functions described later is recorded in the recording medium or the like in the form of a program. The CPU reads out this program to the RAM or the like so as to perform processing and calculation on information, thus realizing the various functions described later.

Fig. 2 is a function block diagram showing functions which the control unit 7 has. As shown in Fig. 2, the control unit 7 includes a perturbation addition unit 21, the gradient calculation unit 22, and a correction unit 23.

The perturbation addition unit 21 substantially simultaneously adds perturbations respectively having different polarities to current set values of predetermined parameters for the wind turbine unit 5A and the wind turbine unit 5B. To be more specific, the perturbation addition unit 21 adds perturbations having opposite polarities ($\Delta\theta k$ and $-\Delta\theta k$) for the wind turbine unit 5A and the wind turbine unit 5B to current set values $\theta k$ of pitch angles of the wind turbine unit 5A and the wind turbine unit 5B. For example, the pitch angle of the wind turbine unit 5A is assumed as $\theta k+\Delta\theta k$, and the pitch angle of the wind turbine unit 5B is assumed as $\theta k-\Delta\theta k$. Blade pitch angle control mechanisms 8A, 8B are respectively provided to wind turbine units 5A, 5B so as to control the pitch angles of the blades. Each of the blade pitch angle control mechanisms 8A, 8B is provided to a rotary part of the wind turbine unit 5 to which the blades are coupled. The perturbation addition unit 21 applies values (θk+Δθk, θk-Δθk), each of which is obtained by adding perturbation to the current set value, to the respective blade pitch angle control mechanisms 8A, 8B of the wind turbine unit 5A and the wind turbine unit 5B as command angles. The command angles are applied to the blade pitch angle control mechanisms from the perturbation addition unit 21 by a voltage or an electric current, communication or the like, for example. Each of the blade pitch angle control mechanisms 8A, 8B performs feedback control such that a command angle and a measured value of the pitch angle agree with each other. The blade pitch angle control mechanism controls the pitch angle of the wind turbine unit 5 using a hydraulic actuator, an electric actuator or the like.

The magnitudes (absolute values) of perturbations (Δθk and -Δθk) are set by taking into account that variations in power generation output of the wind turbine unit 5 can be measured, and promptly converges to an optimum point. The magnitudes (absolute values) of perturbations (Δθk and -Δθk) may be fixed values. Alternatively, the magnitudes of perturbations may be variables which decrease corresponding to the number of times of repetition of optimization processing, for example. Further, substantially simultaneously adding perturbations to the wind turbine unit 5A and the wind turbine unit 5B means to add perturbations to both the wind turbine unit 5A and the wind turbine unit 5B at a predetermined timing in a predetermined control cycle so as to cause the predetermined parameter to vary. Further, the polarity of perturbation may be fixed corresponding to each wind turbine unit 5, or may be determined at random for each control cycle.

In this embodiment, the case is described where the polarity of perturbation is determined at random for each control cycle. Further, in the case where a plurality of parameters are used, the polarity of perturbation to be added to each parameter may be fixed for each parameter, or may be determined at random for each control cycle. By setting the polarities of perturbations to be added to predetermined parameters for the wind turbine unit 5A and the wind turbine unit 5B at random for at least one of each predetermined control cycle and each predetermined parameter, compared to the case where the polarities of perturbations are not set at random, an optimum solution can be efficiently searched for without easily falling into a local solution.

The gradient calculation unit 22 calculates a gradient of power generation outputs at the current set values. To be more specific, power generation outputs of the wind turbine unit 5A and the wind turbine unit 5B are measured by the measuring unit 6 after perturbations are added by the perturbation addition unit 21, and the power generation outputs are inputted into the gradient calculation unit 22. Then, based on the power generation outputs of the wind turbine unit 5A and the wind turbine unit 5B and the perturbations added by the perturbation addition unit 21, the gradient calculation unit 22 approximately calculates a gradient of power generation outputs at a current set value θk of the pitch angle. The gradient is calculated using the following formula (1), for example.

$$g(\theta_k) = \frac{f(\theta_k + \Delta\theta_k \cdot s) - f(\theta_k - \Delta\theta_k \cdot s)}{2\Delta\theta_k \cdot s} \qquad (1)$$

In the formula (1), θk indicates a current set value of a pitch angle, Δθk indicates perturbation, f(θk+Δθk·s) and f(θk-Δθk·s) respectively indicate measured values of power generation outputs of the wind turbine unit 5A and the wind turbine unit 5B after perturbations are added. Further, "s" is a variable which may be set to 1 or -1 at random, and the variable determines the polarity of perturbations. In this embodiment, "s" is determined to be either 1 or -1 before processing of adding perturbations is performed by the perturbation addition unit 21. g(θk) is an approximate value of a gradient of power generation output at an approximately current set value θk of the pitch angle. The formula (1) indicates a simultaneous perturbation stochastic approximation (SPSA). The gradient calculated by the formula (1) is outputted to the correction unit 23.

The correction unit 23 corrects current set values of predetermined parameters for the wind turbine unit 5A and the wind turbine unit 5B such that a gradient of power generation output increases. To be more specific, the correction unit 23 corrects (updates) current set values θk of the pitch angles of each of the wind turbine unit 5A and the wind turbine unit 5B such that power generation outputs of the wind turbine unit 5A and the wind turbine unit 5B increase. A current set value θk of the pitch angle is corrected using the following formula (2), for example.

$$\theta_{k+1} = \theta_k + a_k \cdot g(\theta_k) \qquad (2)$$

In the formula (2), $a_k$ is a constant for correcting a current set value θk of a pitch angle based on a gradient g(θk). $a_k$ is set in advance by experiments, simulations or the like such that a set value of a pitch angle is efficiently and rapidly converged at an optimum point. When the correction unit 23 corrects a current set value θk of a pitch angle using the formula (2), a pitch angle of each of the wind turbine unit 5A and the wind turbine unit 5B is set to $\theta_{k+1}$ and hence,

the wind turbine unit 5A and the wind turbine unit 5B are brought into an operation state where a larger amount of generated power can be outputted. In the formula (2), $a_k$ is not limited to a fixed value, and may be a variable which decreases corresponding to the number of times of repetition of optimization processing, for example.

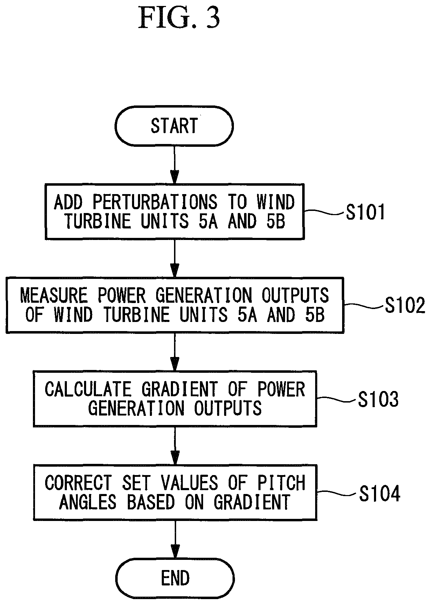

Next, optimization processing performed by the above-mentioned control unit 7 is described with reference to Fig. 3. A flow shown in Fig. 3 is repeatedly executed during a predetermined control cycle.

First, perturbations having opposite polarities are respectively added to the wind turbine unit 5A and the wind turbine unit 5B (S101). Then, power generation outputs of the wind turbine unit 5A and the wind turbine unit 5B are measured (S102).

Next, a gradient of the power generation outputs is calculated using the measured power generation outputs of the wind turbine unit 5A and the wind turbine unit 5B (S103). Then, based on the calculated gradient, set values of pitch angles are corrected (updated) (S104).

As described above, the optimization processing shown in Fig. 3 is repeatedly performed and hence, an optimum point of a parameter (a pitch angle, for example) where power generation output reaches the maximum can be efficiently searched for. Further, the multi-rotor wind power generation apparatus 1 includes the plurality of wind turbine units 5 having substantially the same wind condition. Accordingly, fluctuations in generated power which occur when perturbations having different polarities are added can be evaluated by parallel processing. Therefore, an optimum point can be searched for more promptly (with a smaller number of times of repetition).

The present invention is applicable in the same manner also in the case where perturbation is added to a rotor-rotational-speed-control optimizing coefficient.

A rotor rotational speed control mechanism 9A controls a rotor rotational speed of the wind turbine unit 5A upon reception of an instruction from the perturbation addition unit 21. In the same manner, a rotor rotational speed control mechanism 9B controls a rotor rotational speed of the wind turbine unit 5B upon reception of an instruction from the perturbation addition unit 21. The rotor rotational speed control mechanisms 9A, 9B are respectively provided to the wind turbine units 5. The perturbation addition unit 21 calculates values (Gk+ΔGk, Gk-ΔGk) obtained by adding perturbations having opposite polarities for the wind turbine unit 5A and the wind turbine unit 5B to current set values Gk of rotor-rotational-speed-control optimizing coefficients for the wind turbine unit 5A and the wind turbine unit 5B. Then, a gradient of power generation output is calculated, and the set values of the rotor-rotational-speed-control optimizing coefficients are corrected (updated). The perturbation addition unit 21 applies values (Gk+ΔGk, Gk-ΔGk), each of which is obtained by adding perturbation to the current set value of a rotor-rotational-speed-control optimizing coefficient, to the rotor rotational speed control mechanism 9A and the rotor rotational speed control mechanism 9B as command values. Each of the rotor rotational speed control mechanism 9A and the rotor rotational speed control mechanism 9B calculates a power generation command using the rotor-rotational-speed-control optimizing coefficient to which perturbation is added. Then, each of the rotor rotational speed control mechanism 9A and the rotor rotational speed control mechanism 9B controls a voltage or an electric current of a generator so as to allow current generated power to agree with the power generation command, thus controlling a rotational speed of the rotor of the wind turbine unit 5A or a rotational speed of the rotor of the wind turbine unit 5B. The power generation command may be estimated by multiplying an optimizing coefficient by a value obtained by squaring the rotor rotational speed.

Next, a modification of the control system of the wind power generation apparatus 1 according to this embodiment is described. In the above-mentioned one embodiment, the case has been described where two wind turbine units 5 are provided. However, in this modification, the case is described where two or more wind turbine units 5 are provided. In the description made hereinafter, as one example, the case is described where four wind turbine units 5 (5A to 5D) are provided.

In the case where two or more wind turbine units 5 are provided, the provided wind turbine units 5 are divided into groups consisting of a first wind turbine unit including at least one wind turbine unit 5 and a second wind turbine unit including at least one wind turbine unit 5. For example, in the case where the four wind turbine units (5A to 5D) are provided (not shown in the drawing), the wind turbine units 5A and 5B are assumed to be included in the first wind turbine unit, and the wind turbine units 5C and 5D are assumed to be included in the second wind turbine unit. In dividing the wind turbine units 5 into groups, it is preferable that wind turbine units having more similar wind conditions be grouped into the same group. A method for dividing the wind turbine units 5 into groups consisting of the first wind turbine unit and the second wind turbine unit may be suitably changed.

A perturbation addition unit 21 in this modification substantially simultaneously adds perturbations respectively having different polarities to current set values of predetermined parameters for the first wind turbine unit (the wind turbine units 5A and 5B) and the second wind turbine units (wind turbine units 5C and 5D). To be more specific, the perturbation addition unit 21 adds perturbations having opposite polarities (Δθk and -Δθk) for the first wind turbine unit and the second wind turbine unit to current set values θk of pitch angles of the first wind turbine unit and the second wind turbine unit. For example, the pitch angle of the first wind turbine unit (the wind turbine units 5A and 5B) is assumed as θk+Δθk, and the pitch angle of the second wind turbine unit (the wind turbine units 5C and 5D) is assumed as θk-Δθk.

A measuring unit 6 in this modification calculates an average value of measured power generation outputs for each of the first wind turbine unit and the second wind turbine unit after a perturbation is added. To be more specific, the measuring unit 6 measures power generation outputs of the wind turbine units 5A to 5D after perturbations are added. Then, the measuring unit 6 calculates an average value of power generation outputs for each of the first wind turbine unit and the second wind turbine unit, that is, an average value of power generation outputs of the wind turbine units 5A and 5B and an average value of power generation outputs of the wind turbine units 5C and 5D. Thereafter, the measuring unit 6 outputs the respective calculated average values to a control unit 7 (a gradient calculation unit 22).

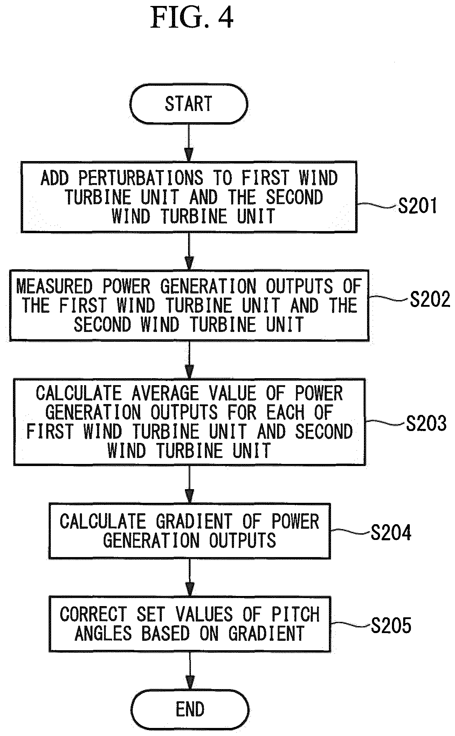

Next, optimization processing performed by the control unit 7 in this modification is described with reference to Fig. 4. A flow shown in Fig. 4 is repeatedly executed during a predetermined control cycle.

First, perturbations having opposite polarities are added to the first wind turbine unit (wind turbine units 5A and 5B) and the second wind turbine unit (wind turbine units 5C and 5D) (S201). Next, power generation outputs of the first wind turbine unit (the wind turbine units 5A and 5B) and the second wind turbine unit (the wind turbine units 5C and 5D) are measured (S202).

Next, an average value of power generation outputs for each of the first wind turbine unit (the wind turbine units 5A and 5B) and the second wind turbine unit (the wind turbine units 5C and 5D) is calculated (S203).

Next, using the calculated average values of the power generation outputs of the first wind turbine unit (the wind turbine units 5A and 5B) and the second wind turbine unit (the wind turbine units 5C and 5D), a gradient of the power generation outputs is calculated (S204). Then, based on the calculated gradient, set values of pitch angles are corrected (updated) (S205).

With such operations, also in the case where two or more wind turbine units 5 are provided, optimization processing can be performed. Further, the power generation output is obtained by averaging the power generation outputs of the first wind turbine unit and the second wind turbine unit. Accordingly, even if the wind turbine units included in the first wind turbine unit vary in generated power due to deterioration over time or the like, for example, the current set value of a predetermined parameter can be efficiently corrected.

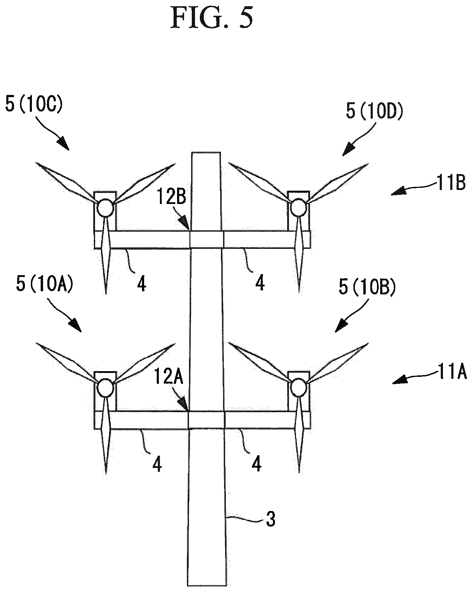

Fig. 5 is a view showing the case where perturbation is applied to a yaw angle. The case of applying a perturbation to the yaw angle is described with reference to Fig. 5. In a wind power generation apparatus in Fig. 5, two wind turbine units 10A, 10B are provided on both sides of a tower portion 3 at substantially the same height from a ground surface, and two wind turbine units 10C, 10D are provided on both sides of the tower portion 3 at substantially the same height at the position higher than the wind turbine units 10A, 10B. In this embodiment, the wind turbine unit 10A and the wind turbine unit 10B are assumed as a first wind turbine unit 11A, and the wind turbine unit 10C and the wind turbine unit 10D are assumed as a second wind turbine unit 11B. Yaw angle control mechanisms 12A, 12B control yaw angles of the first wind turbine unit 11A and the second wind turbine unit 11B. That is, each of the yaw angle control mechanisms 12A, 12B is provided at a connecting portion between the tower portion 3 and a support member 4 of the first wind turbine unit 11A or the second wind turbine unit 11B. The yaw angle of each of the first wind turbine unit 11A and the second wind turbine unit 11B can be controlled by the yaw angle control mechanism using the tower portion 3 as an axis. In this case, the perturbation addition unit 21 applies values ($\phi k + \Delta \phi k$, $\phi k - \Delta \phi k$) obtained by adding perturbations having opposite polarities for the first wind turbine unit 11A and the second wind turbine unit 11B to current set values $\phi k$ of yaw angles for the first wind turbine unit 11A and the second wind turbine unit 11B as command angles. Then, a gradient of the power generation outputs is calculated, and set values of the yaw angles are corrected (updated). To be more specific, the perturbation addition unit 21 transmits a command value for the yaw angle of the first wind turbine unit 11A to the yaw angle control mechanism 12A, and transmits a command value for the yaw angle of the second wind turbine unit 11B to the yaw angle control mechanism 12B. The yaw angle control mechanisms 12A, 12B perform control such that measured yaw angles of the first wind turbine unit 11A and the second wind turbine unit 11B agree with the transmitted command values for the yaw angles. The yaw angle control mechanisms 12A, 12B use electric motors or the like so as to rotate yaw angles of the first wind turbine unit 11A and the second wind turbine unit 11B. Further, the yaw angle is measured by a sensor provided between the support member 4 and the tower 3.

As has been described above, according to the control system for a wind power generation apparatus, the wind power generation apparatus, and the control method of this embodiment, each of the plurality of wind turbine units 5 includes the rotor, the blade which is provided to the rotor, and the generator which generates power using a rotational force of the rotor, and each of the wind turbine units 5 is supported by the support member 4 coupled to the tower portion 3. With such a configuration, the plurality of wind turbine units 5 are installed on the tower portion 3 by way of the support members 4. Accordingly, the respective wind turbine units 5 are disposed in environments (wind conditions) having a relatively similar wind condition, thus rotating and generating power by catching wind in the same direction. Further, perturbations respectively having different polarities are added to predetermined parameters for the first wind turbine unit (for the wind turbine unit 5A in the example shown in Fig. 1, for the wind turbine units 5A and 5B in the case of the above-mentioned modification) and the second wind turbine unit (the wind turbine unit 5B in the example shown in Fig. 1, the wind turbine units 5C and 5D in the case of the above-mentioned modification). Power generation outputs of the first wind turbine unit and the second wind turbine unit which are varied due to the addition of the perturbations are measured. A gradient of the generated powers at the current set values is approximately calculated based on the measured power generation outputs. Then, the current set values are corrected such that the calculated gradient increases. Accordingly, in both the first wind turbine unit and the second wind turbine unit, the predetermined parameters can be set at points closer to the optimum points and hence, the entire amount of power generation can be increased. Further, perturbations respectively having different polarities are simultaneously added to the first wind turbine unit and the second wind turbine unit and hence, a gradient for correcting the current set values can be rapidly and efficiently acquired whereby the current set values of the predetermined parameters can be promptly corrected. Therefore, followability with respect to wind fluctuations is improved and hence, the wind power generation apparatus 1 can generate power more optimally.

Further, the polarities of the perturbations to be added to the first wind turbine unit and the second wind turbine unit are set at random for each predetermined control cycle. With such a configuration, compared to the case where the polarities of perturbations are not set at random, an optimum solution can be efficiently searched for without easily falling into a local solution. That is, both calculation efficiency and search ability can be improved.

That is, the wind power generation apparatus 1 according to this embodiment has high followability with respect to variations in wind condition, can be efficiently operated at an optimum point, and can increase the amount of power generation.

The present invention is not limited to the above-mentioned embodiment, and various modifications are conceivable without departing from the invention as defined in the appended claims.

[Reference Signs List]

| | |
|---|---|
| 1 | wind power generation apparatus |
| 3 | tower portion |
| 4 | support member |
| 5 (5A to 5D, 10A to 10D) | wind turbine unit |
| 6 | measuring unit |
| 7 | control unit |
| 8A, 8B | blade pitch angle control mechanism |
| 9A, 9B | rotor rotational speed control mechanism |
| 11A | first wind turbine unit |
| 11B | second wind turbine unit |
| 12A, 12B | yaw angle control mechanism |
| 21 | perturbation addition unit |
| 22 | gradient calculation unit |
| 23 | correction unit |

**Claims**

1.  A control system for a wind power generation apparatus including:

    a tower portion;
    a plurality of wind turbine units each including a rotor, a blade which is provided to the rotor, and a generator which generates power using a rotational force of the rotor; and
    a support member coupled to the tower portion, and configured to support the plurality of wind turbine units, the plurality of wind turbine units including a first wind turbine unit and a second wind turbine unit, the control system comprising:

        a perturbation addition unit configured to substantially simultaneously add perturbations respectively having different polarities to current set values of predetermined parameters for the first wind turbine unit and the second wind turbine unit;
        a measuring unit configured to measure respective power generation outputs of the first wind turbine unit and the second wind turbine unit after the perturbations are added;
        a gradient calculation unit configured to calculate a gradient of the power generation outputs at the current set values; and
        a correction unit configured to correct the current set values of the predetermined parameters for the first wind turbine unit and the second wind turbine unit such that the gradient increases.

**2.** The control system for a wind power generation apparatus according to claim 1, wherein
the measuring unit calculates, for each of the first wind turbine unit and the second wind turbine unit, an average value of the power generation outputs measured after the perturbations are added.

**3.** The control system for a wind power generation apparatus according to claim 1 or 2, wherein
the perturbation addition unit is configured to set the polarities of the perturbations to be added to the predetermined parameters for the first wind turbine unit and the second wind turbine unit at random for at least one of each predetermined control cycle and each predetermined parameter.

**4.** The control system for a wind power generation apparatus according to any one of claims 1 to 3, wherein
the predetermined parameter is at least one of a pitch angle of the blade, a yaw angle of the wind turbine unit, or a rotor-rotational-speed-control optimizing coefficient.

**5.** A wind power generation apparatus comprising:

a tower portion;
a plurality of wind turbine units each including a rotor, a blade which is provided to the rotor, and a generator which generates power using a rotational force of the rotor;
a support member coupled to the tower portion, and configured to support the plurality of wind turbine units; and
the control system for a wind power generation apparatus described in any one of claims 1 to 4.

**6.** A method for controlling a wind power generation apparatus including: a tower portion; a plurality of wind turbine units each including a rotor, a blade which is provided to the rotor, and a generator which generates power using a rotational force of the rotor; and a support member coupled to the tower portion, and configured to support the plurality of wind turbine units, the plurality of wind turbine units including a first wind turbine unit and a second wind turbine unit, the method comprising:

a perturbation adding step of substantially simultaneously adding perturbations respectively having different polarities to current set values of predetermined parameters for the first wind turbine unit and the second wind turbine unit;
a measuring step of measuring respective power generation outputs of the first wind turbine unit and the second wind turbine unit after the perturbations are added;
a gradient calculating step of calculating a gradient of the power generation outputs at the current set values; and
a correcting step of correcting the current set values of the predetermined parameters for the first wind turbine unit and the second wind turbine unit such that the gradient increases.

**Patentansprüche**

**1.** Steuersystem für eine Windenergieerzeugungsvorrichtung, die Folgendes beinhaltet:

einen Turmabschnitt;
eine Vielzahl von Windturbineneinheiten, von denen jede einen Rotor, ein Blatt, das am Rotor bereitgestellt ist, und einen Generator, der unter Verwendung einer Rotationskraft des Rotors Energie erzeugt, beinhaltet; und
ein Stützelement, das an den Turmabschnitt gekoppelt und dazu ausgelegt ist, die Vielzahl von Windturbineneinheiten zu stützen, wobei die Vielzahl von Windturbineneinheiten eine erste Windturbineneinheit und eine zweite Windturbineneinheit beinhalten, wobei das Steuersystem Folgendes umfasst:

eine Störungshinzufügungseinheit, die dazu ausgelegt ist, Störungen, die verschiedene Polaritäten aufweisen, zu aktuellen Einstellwerten vorbestimmter Parameter für die erste Windturbineneinheit und die zweite Windturbineneinheit im Wesentlichen gleichzeitig hinzuzufügen;
eine Messeinheit, die dazu ausgelegt ist, jeweilige Energieerzeugungsausgänge der ersten Windturbineneinheit und der zweiten Windturbineneinheit zu messen, nachdem Störungen hinzugefügt wurden;
eine Gradientenberechnungseinheit, die dazu ausgelegt ist, einen Gradienten der Energieerzeugungsausgänge bei den aktuellen Einstellwerten zu berechnen; und
eine Korrektureinheit, die dazu ausgelegt ist, die aktuellen Einstellwerte der vorbestimmten Parameter für die erste Windturbineneinheit und die zweite Windturbineneinheit derart zu korrigieren, dass der Gradient zunimmt.

**2.** Steuersystem für eine Windenergieerzeugungsvorrichtung nach Anspruch 1, wobei
die Messeinheit für jede der ersten Windturbineneinheit und der zweiten Windturbineneinheit einen Durchschnittswert der Energieerzeugungsausgänge berechnet, die gemessen wurden, nachdem die Störungen hinzugefügt wurden.

**3.** Steuersystem für eine Windenergieerzeugungsvorrichtung nach Anspruch 1 oder 2, wobei
die Störungshinzufügungseinheit dazu ausgelegt ist, die Polaritäten der Störungen, die zu den vorbestimmten Parametern für die erste Windturbineneinheit und die zweite Windturbineneinheit hinzuzufügen sind, für mindestens einen von jedem vorbestimmten Steuerzyklus und jedem vorbestimmten Parameter willkürlich einzustellen.

**4.** Steuersystem für eine Windenergieerzeugungsvorrichtung nach einem der Ansprüche 1 bis 3, wobei
der vorbestimmte Parameter mindestens eines von einem Nickwinkel des Blatts, einem Gierwinkel der Windturbineneinheit oder einem Koeffizienten zur Optimierung der Rotorrotationsgeschwindigkeitssteuerung ist.

**5.** Windenergieerzeugungsvorrichtung, die Folgendes umfasst:

einen Turmabschnitt;
eine Vielzahl von Windturbineneinheiten, von denen jede einen Rotor, ein Blatt, das am Rotor bereitgestellt ist, und einen Generator, der unter Verwendung einer Rotationskraft des Rotors Energie erzeugt, beinhaltet;
ein Stützelement, das an den Turmabschnitt gekoppelt und dazu ausgelegt ist, die Vielzahl von Windturbineneinheiten zu stützen; und
das Steuersystem für eine Windenergieerzeugungsvorrichtung, die in einem der Ansprüche 1 bis 4, beschrieben ist.

**6.** Verfahren zum Steuern einer Windenergieerzeugungsvorrichtung, die Folgendes beinhaltet: einen Turmabschnitt; eine Vielzahl von Windturbineneinheiten, von denen jede einen Rotor, ein Blatt, das am Rotor bereitgestellt ist, und einen Generator, der unter Verwendung einer Rotationskraft des Rotors Energie erzeugt, beinhaltet, sowie ein Stützelement, das an den Turmabschnitt gekoppelt und dazu ausgelegt ist, die Vielzahl von Windturbineneinheiten zu stützen, wobei die Vielzahl von Windturbineneinheiten eine erste Windturbineneinheit und eine zweite Windturbineneinheit beinhalten, wobei das Verfahren Folgendes umfasst:

einen Störungshinzufügungsschritt zum im Wesentlichen gleichzeitigen Hinzufügen von Störungen, die verschiedene Polaritäten aufweisen, zu aktuellen Einstellwerten vorbestimmter Parameter für die erste Windturbineneinheit und die zweite Windturbineneinheit;
einen Messschritt zum Messen jeweiliger Energieerzeugungsausgänge der ersten Windturbineneinheit und der zweiten Windturbineneinheit, nachdem Störungen hinzugefügt wurden;
einen Gradientenberechnungsschritt zum Berechnen eines Gradienten der Energieerzeugungsausgänge bei den aktuellen Einstellwerten; und
einen Korrekturschritt zum Korrigieren der aktuellen Einstellwerte der vorbestimmten Parameter für die erste Windturbineneinheit und die zweite Windturbineneinheit derart, dass der Gradient zunimmt.

**Revendications**

**1.** Système de commande pour un appareil de production d'énergie éolienne comprenant :

une partie de tour ;
une pluralité d'unités d'éolienne comprenant chacune un rotor, une pale qui est prévue sur le rotor, et un générateur qui génère de l'énergie en utilisant une force de rotation du rotor ; et
un élément de support couplé à la partie de tour, et configuré pour supporter la pluralité d'unités d'éolienne, la pluralité d'unités d'éolienne comprenant une première unité d'éolienne et une seconde unité d'éolienne, le système de commande comprenant :

une unité d'ajout de perturbation configurée pour ajouter sensiblement simultanément des perturbations ayant respectivement des polarités différentes, aux valeurs de consigne courantes des paramètres prédéterminés pour la première unité d'éolienne et la seconde unité d'éolienne ;
une unité de mesure configurée pour mesurer les résultats de production d'énergie respectifs de la première unité d'éolienne et de la seconde unité d'éolienne après que les perturbations ont été ajoutées ;

une unité de calcul de gradient configurée pour calculer un gradient des résultats de production d'énergie aux valeurs de consigne courantes ; et

une unité de correction configurée pour corriger les valeurs de consigne courantes des paramètres prédéterminés pour la première unité d'éolienne et la seconde unité d'éolienne de sorte que le gradient augmente.

**2.** Système de commande pour un appareil de production d'énergie éolienne selon la revendication 1, dans lequel :
l'unité de mesure calcule, pour chacune parmi la première unité éolienne et la seconde unité éolienne, une valeur moyenne des résultats de production d'énergie mesurés après que les perturbations ont été ajoutées.

**3.** Système de commande pour un appareil de production d'énergie éolienne selon la revendication 1 ou 2, dans lequel :
l'unité d'ajout de perturbation est configurée pour régler les polarités des perturbations à ajouter aux paramètres prédéterminés pour la première unité d'éolienne et la seconde unité d'éolienne de manière aléatoire pour au moins l'un parmi chaque cycle de commande prédéterminé et chaque paramètre prédéterminé.

**4.** Système de commande pour un appareil de production d'énergie éolienne selon l'une quelconque des revendications 1 à 3, dans lequel :
le paramètre prédéterminé est au moins l'un parmi un angle de calage de la pale, un angle de lacet de l'unité d'éolienne ou un coefficient d'optimisation de commande de vitesse de rotation de rotor.

**5.** Appareil de production d'énergie éolienne comprenant :

une partie de tour ;
une pluralité d'unités d'éolienne comprenant chacune un rotor, une pale qui est prévue sur le rotor, et un générateur qui génère de l'énergie en utilisant une force de rotation du rotor ;
un élément de support couplé à la partie de tour, et configuré pour supporter la pluralité d'unités d'éolienne ; et
le système de commande pour un appareil de production d'énergie éolienne décrit selon l'une quelconque des revendications 1 à 4.

**6.** Procédé pour commander un appareil de production d'énergie éolienne comprenant : une partie de tour ; une pluralité d'unités d'éolienne comprenant chacune un rotor, une pale qui est prévue sur le rotor, et un générateur qui génère de l'énergie en utilisant une force de rotation du rotor ; et un élément de support couplé à la partie de tour, et configuré pour supporter la pluralité d'unités d'éolienne, la pluralité d'unités d'éolienne comprenant une première unité d'éolienne et une seconde unité d'éolienne, le procédé comprenant :

une étape d'ajout de perturbation pour ajouter sensiblement simultanément des perturbations ayant respectivement différentes polarités aux valeurs de consigne courantes des paramètres prédéterminés pour la première unité d'éolienne et la seconde unité d'éolienne ;
une étape de mesure pour mesurer les résultats de production d'énergie respectifs de la première unité d'éolienne et de la seconde unité d'éolienne après que les perturbations ont été ajoutées ;
une étape de calcul de gradient pour calculer un gradient des résultats de production d'énergie aux valeurs de consigne courantes ; et
une étape de correction pour corriger les valeurs de consigne courantes des paramètres prédéterminés pour la première unité d'éolienne et la seconde unité d'éolienne de sorte que le gradient augmente.

# FIG. 1

5 (5A)　　　　　　　　　　5 (5B)

　　　　　　　　　　　　　　　　　　1

8A (9A)　　　　4　　4　　8B (9B)

3

| MEASURING UNIT | —6 |

| CONTROL UNIT | —7 |

# FIG. 2

CONTROL UNIT　　　　　　　—7

| PERTURBATION ADDITION UNIT | —21 |

| GRADIENT CALCULATION UNIT | —22 |

| CORRECTION UNIT | —23 |

# FIG. 3

START

ADD PERTURBATIONS TO WIND
TURBINE UNITS 5A AND 5B — S101

MEASURE POWER GENERATION OUTPUTS
OF WIND TURBINE UNITS 5A AND 5B — S102

CALCULATE GRADIENT OF POWER
GENERATION OUTPUTS — S103

CORRECT SET VALUES OF PITCH
ANGLES BASED ON GRADIENT — S104

END

# FIG. 4

START

ADD PERTURBATIONS TO FIRST WIND TURBINE UNIT AND THE SECOND WIND TURBINE UNIT — S201

MEASURED POWER GENERATION OUTPUTS OF THE FIRST WIND TURBINE UNIT AND THE SECOND WIND TURBINE UNIT — S202

CALCULATE AVERAGE VALUE OF POWER GENERATION OUTPUTS FOR EACH OF FIRST WIND TURBINE UNIT AND SECOND WIND TURBINE UNIT — S203

CALCULATE GRADIENT OF POWER GENERATION OUTPUTS — S204

CORRECT SET VALUES OF PITCH ANGLES BASED ON GRADIENT — S205

END

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017108057 A
- DE 102012020052
- WO 2016150447 A